# FASCICULE DE BREVET EUROPEEN

(11) **EP 4 353 571 B1**
(45) Date de publication et mention de la délivrance du brevet: **12.11.2025**
(21) Numéro de dépôt: 23197225.8
(22) Date de dépôt: 13.09.2023
(51) Int. Cl.: B62D 29/04, B62D 25/20

(54) **ENSEMBLE DE VEHICULE AUTOMOBILE ET VEHICULE AUTOMOBILE COMPORTANT UN TEL ENSEMBLE**
KRAFTFAHRZEUGANORDNUNG UND KRAFTFAHRZEUG MIT EINER SOLCHEN ANORDNUNG
MOTOR VEHICLE ASSEMBLY AND MOTOR VEHICLE COMPRISING SUCH AN ASSEMBLY

(30) Priorité: 14.10.2022 FR 2210606
(43) Date de publication de la demande: 17.04.2024
(73) Titulaire: Stellantis Auto SAS, 78300 Poissy (FR)
(72) Inventeur: DAROUY, EL HOUCINE, 28810 MOHAMMEDIA (MA); RAJAE, BOUNJARA, 14000 KENITRA (MA); FAOUZI, OMAR, 20190 CASABLANCA (MA); LAFTOUHI, KHALIL, 10180 RABAT (MA); NIL, BADR EDDINE, 90060 TANGER (MA)
(74) Mandataire: BCIP

(56) Documents cités:
- DE-U1- 8 807 208
- FR-A1- 2 093 943
- FR-A1- 2 698 601
- US-A- 5 934 745
- US-B1- 6 206 458

## Description

### [Domaine technique]

L'invention a trait au domaine des véhicules automobiles et concerne plus particulièrement un ensemble de véhicule automobile et un véhicule automobile comportant un tel ensemble.

### [Etat de la technique antérieure]

Les véhicules automobiles, en particulier les véhicules électriques à deux places dits « micro-citadins », comportent de façon connue un ensemble de pièces assemblées entre elles de façon à former le soubassement du véhicule automobile.

Un tel ensemble de véhicule comporte plusieurs pièces rapportées entre elles comportant, notamment, un plancher avant, prolongé à l'avant par un passages de roue avant gauche et avant droit et par un tablier avant, séparant le moteur de l'habitacle du véhicule.

Par exemple, les documents FR2093943 et FR2698601 décrivent un plancher de véhicule qui est séparé deux parties suivant l'axe longitudinal du véhicule.

De la même manière, l'ensemble de véhicule comporte également, notamment, un plancher arrière, prolongé à l'arrière par des passages de roue arrière gauche et arrière droit, par des pare-boues arrière gauche et arrière droit et par un tablier arrière, ces pièces étant elles aussi rapportées entre elles.

Le soubassement du véhicule automobile est la partie du véhicule la plus exposée aux projections d'eau, de boue, de gravillons et de sel.

Il a été constaté que les véhicules automobiles électriques à deux places, véhicules automobiles dits « micro-citadins », qui comportent un tel ensemble de véhicule, sont particulièrement sujets aux infiltrations d'eau à l'intérieur de leur habitacle, notamment lors d'un passage du véhicule automobile dans un gué, l'eau s'introduisant au niveau des jonctions entre les différentes pièces formant l'ensemble de véhicule au niveau du soubassement dudit véhicule.

De même, les composants électriques montés au niveau du soubassement du véhicule automobile, notamment la batterie de traction alimentant le moteur électrique du véhicule automobile, ou encore le chargeur de batterie, sont régulièrement dégradés par les projections de boue ou de gravillons qui s'introduisent par au niveau des jonctions des pièces formant l'ensemble de véhicule automobile.

### [Exposé de l'invention]

La présente invention vise à surmonter les inconvénients précités, et concerne pour ce faire un ensemble de véhicule automobile formant le soubassement dudit véhicule automobile, comportant un sous-ensemble gauche et un sous-ensemble droit, caractérisé en ce que lesdits sous-ensembles gauche et droit consistent chacun en une unique pièce réalisée en matériau plastique et en ce que lesdits sous-ensembles gauche et droit sont assemblés entre eux au niveau d'une zone de jonction. Les sous-ensembles gauche et droit sont emmanchés l'un relativement à l'autre. Le sous-ensemble gauche comporte un profilé femelle et le sous-ensemble droit comporte un profilé mâle coopérant avec ledit profilé femelle. Let profilé femelle est pratiqué sous une face inférieure dudit sous-ensemble gauche et ledit profilé mâle est pratiqué sous une face inférieure dudit sous-ensemble droit.

Ainsi, chaque sous-ensemble gauche et droit consiste chacun en une unique pièce, réalisée en matériau plastique. On réduit alors, par rapport à l'art antérieur, le nombre de pièces rapportées formant l'ensemble de véhicule automobile définissant le soubassement du véhicule automobile.

En réduisant le nombre de pièces rapportées, on limite avantageusement le risque d'infiltration d'eau par le soubassement du véhicule automobile, infiltration pouvant survenir notamment lors d'un passage dudit véhicule dans un gué.

On limite également le risque de dégradation des composants électriques montés au niveau du soubassement du véhicule automobile qui pourrait survenir par les projections de boue ou de gravillons lors du déplacement du véhicule automobile.

Selon des caractéristiques optionnelles de l'ensemble selon l'invention :
- ledit sous-ensemble gauche comporte au moins un plancher gauche, un tablier avant gauche et un tablier arrière gauche, un pare-boue avant gauche et un pare-boue arrière gauche, et ledit sous-ensemble droit comporte au moins un plancher droit, un tablier avant droit et un tablier arrière droit, un pare-boue avant droit et un pare-boue arrière droit ;
- ladite zone de jonction s'étend longitudinalement relativement audit ensemble ; -;
- ledit profilé femelle s'étend sur toute la longueur du sous-ensemble gauche et ledit profilé mâle s'étend sur toute la longueur du sous-ensemble droit ;
- l'ensemble comporte un joint d'étanchéité monté entre lesdits profilés mâle et femelle ;
- l'ensemble comporte un système de clippage agencé pour opérer une fixation entre ledit sous-ensemble gauche et ledit sous-ensemble droit.

L'invention concerne aussi un véhicule automobile, remarquable en ce qu'il comporte un ensemble obtenu selon l'invention.

### [Description des dessins]

D'autres caractéristiques, buts et avantages de l'invention apparaîtront à la lecture de la description détaillée qui suit pour la compréhension de laquelle on se reportera aux dessins annexés dans lesquels :
[Fig. 1] illustre de façon schématique un véhicule automobile selon l'invention, en vue isométrique arrière gauche.
[Fig. 2] est une vue isométrique avant droite du véhicule automobile selon l'invention.
[Fig. 3] est une vue de dessus du véhicule automobile selon l'invention.
[Fig. 4] est une vue en coupe selon la ligne IV-IV de la figure 3, en perspective.

### [Description des modes de réalisation]

Dans la suite de la description, des éléments présentant une structure identique ou des fonctions analogues sont désignés par une même référence.

On adoptera par convention, à titre non limitatif, des orientations longitudinale, verticale et transversale indiquées par le trièdre direct (L, V, T) désignant les axes longitudinal, vertical et transversal du véhicule.

Dans ce qui suit, les termes « avant », « arrière », « gauche », « droit », « inférieur » et « supérieur » s'entendent par rapport au véhicule.

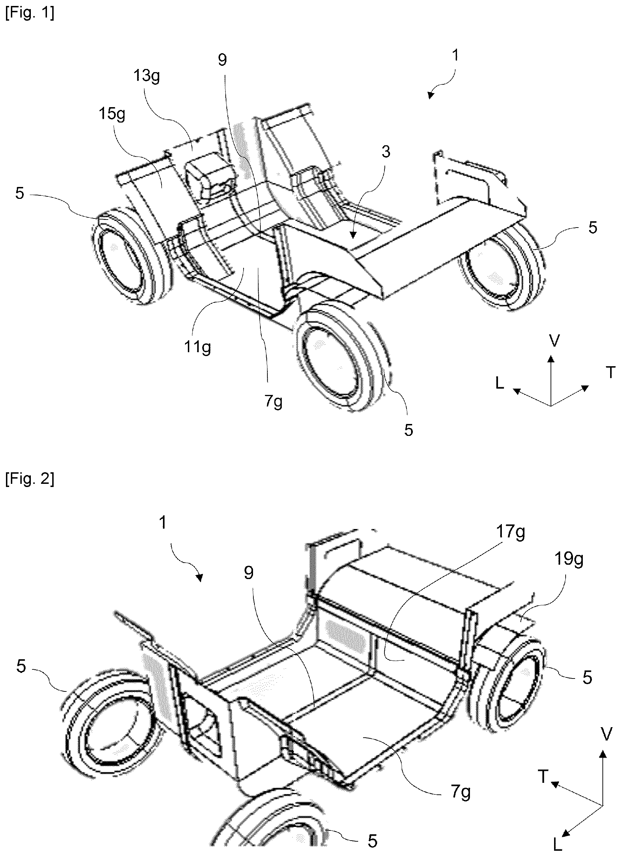

On se réfère aux figures 1 et 2 montrant de façon schématique un exemple de réalisation d'un véhicule automobile 1 selon l'invention, respectivement en vue isométrique arrière gauche et avant droite.

Le véhicule automobile 1 est un véhicule électrique, du type « micro-citadin », par exemple à deux places.

Le véhicule automobile 1 comporte un ensemble 3 définissant une partie de la caisse du véhicule automobile 1 et formant le soubassement du véhicule automobile 1.

L'ensemble 3 de véhicule automobile 1 est destiné à être supporté par un ensemble de roues 5.

Le véhicule automobile 1 illustré aux figures est un quadricycle.

Toutefois, la présente invention s'applique de la même manière aux véhicules automobiles de type « tricycle ».

L'ensemble 3 comporte un sous-ensemble gauche 7g et un sous-ensemble droit 7d assemblés entre eux au niveau d'une zone de jonction 9.

Dans l'exemple de réalisation illustré aux figures, la zone de jonction 9 s'étend longitudinalement relativement au véhicule automobile 1.

Selon une variante de réalisation non représentée aux figures, la zone de jonction 9 entre les sous-ensembles gauche 7g et droit 7d s'étend selon une autre direction, par exemple selon un direction transversale relativement au véhicule automobile 1.

Le sous-ensemble gauche 7g comporte un plancher gauche 11g, définissant une partie inférieure de l'habitacle du véhicule automobile 1.

Le sous-ensemble gauche 7g comporte en outre un tablier avant gauche 13g, séparant une partie du moteur de l'habitacle du véhicule automobile 1 et prolongeant le plancher gauche 11g à l'avant.

Le sous-ensemble gauche 7g comporte en outre un pare-boue avant gauche 15g, s'étendant au-dessus de la roue 5 correspondante et prolongeant le tablier avant gauche 13g latéralement vers l'extérieur.

Comme mieux visible à la figure 2, le sous-ensemble gauche 7g comporte en outre un tablier arrière gauche 17g, prolongeant le plancher gauche 11g à l'arrière.

Le sous-ensemble gauche 7g comporte en outre un pare-boue arrière gauche 19g, s'étendant au-dessus de la roue 5 correspondante et prolongeant le tablier arrière gauche 17g latéralement vers l'extérieur.

Ainsi, le sous-ensemble gauche 7g comporte :
- un plancher gauche 11g,
- un tablier avant gauche 13g,
- un pare-boue avant gauche 15g,
- un tablier arrière gauche 17g, et
- un pare-boue arrière gauche 19g.

Selon l'invention, le sous-ensemble gauche 7g consiste en une unique pièce réalisée en matériau plastique, par exemple en polypropylène.

Le sous-ensemble gauche 7g peut par exemple être obtenu par un procédé de moulage par injection plastique, connu de l'homme du métier.

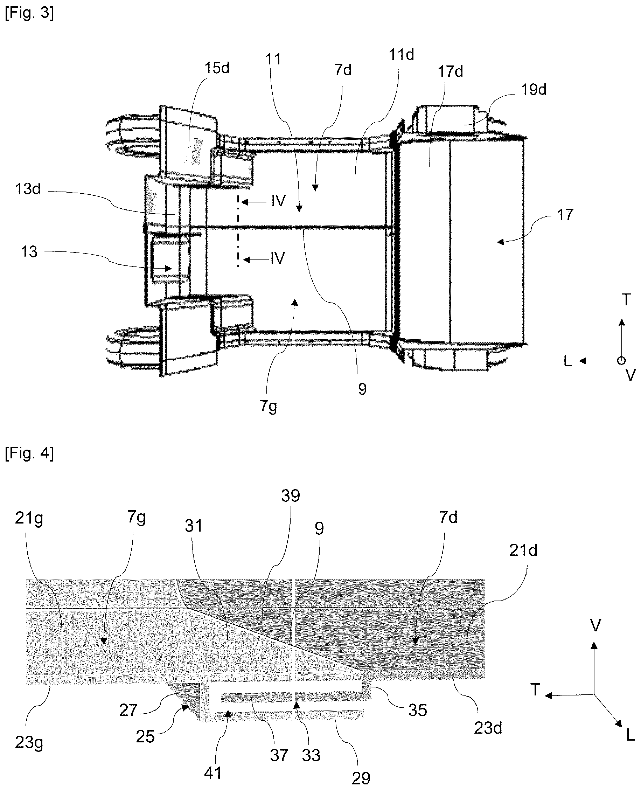

On se réfère à la figure 3 montrant le véhicule automobile 1 en vue de dessus.

La description faite pour le sous-ensemble gauche 7g de l'ensemble 3 de véhicule automobile 1 s'applique de la même manière au sous-ensemble droit 7d.

Le sous-ensemble droit 7d comporte un plancher droit 11d, définissant une partie inférieure de l'habitacle du véhicule automobile 1. Lorsque les sous-ensembles gauche 7g et droit 7d sont assemblés entre eux, le plancher droit 11d définit avec le plancher gauche 11g le plancher 11 du véhicule automobile 1.

Le sous-ensemble droit 7d comporte en outre un tablier avant droit 13d, séparant une partie du moteur de l'habitacle du véhicule automobile 1 et prolongeant le plancher droit 11d à l'avant. Lorsque les sous-ensembles gauche 7g et droit 7d sont assemblés entre eux, le tablier avant droit 13d forme avec le tablier avant gauche 13g le tablier avant 13 du véhicule automobile 1.

Le sous-ensemble droit 7d comporte en outre un pare-boue avant droit 15d, s'étendant au-dessus de la roue 5 correspondante et prolongeant le tablier avant droit 13d latéralement vers l'extérieur.

Le sous-ensemble droit 7d comporte en outre un tablier arrière droit 17d, prolongeant le plancher droit 11d à l'arrière. Lorsque les sous-ensembles gauche 7g et droit 7d sont assemblés entre eux, le tablier arrière droit 17d forme avec le tablier arrière gauche 17g le tablier arrière 17 du véhicule automobile 1.

Le sous-ensemble droit 7d comporte en outre un pare-boue arrière droit 19d, s'étendant au-dessus de la roue 5 correspondante et prolongeant le tablier arrière droit 17d latéralement vers l'extérieur.

Ainsi, le sous-ensemble droit 7d comporte :
- un plancher droit 11d,
- un tablier avant droit 13d,
- un pare-boue avant droit 15d,
- un tablier arrière droit 17d, et
- un pare-boue arrière droit 19d.

Selon l'invention, le sous-ensemble droit 7d consiste en une unique pièce réalisée en matériau plastique, par exemple en polypropylène.

Comme c'est le cas pour le sous-ensemble gauche 7g, le sous-ensemble droit 7d peut par exemple être obtenu par un procédé de moulage par injection plastique, connu de l'homme du métier.

On se réfère à la figure 4 montrant une vue en coupe selon la ligne IV-IV de la figure 3, en perspective.

Dans un exemple de réalisation de l'ensemble 3, l'assemblage entre les sous-ensembles droit 7d et gauche 7g au niveau de la zone de jonction 9 est obtenu par emmanchement entre les sous-ensembles 7d, 7g.

Pour ce faire, un profilé femelle 25 est pratiqué sur le sous-ensemble gauche 7g.

Le sous-ensemble gauche 7g comporte une face supérieure 21g et une face inférieure 23g. De même, le sous-ensemble droit 7d comporte une face supérieure 21d et une face inférieure 23d.

Dans l'exemple de réalisation illustré, le profilé femelle 25 est pratiqué sous la face inférieure 23g du sous-ensemble gauche 7g.

Selon une variante de réalisation non illustrée, le profilé femelle 25 peut être pratiqué sur une autre face du sous-ensemble droit 7d, notamment sur la face supérieure 21g.

Dans un exemple de réalisation, le profilé femelle 25 présente une forme de L.

A cet effet, le profilé femelle 25 comporte un premier bord 27, s'étendant depuis la face inférieure 23g du sous-ensemble gauche 7g, sensiblement perpendiculairement à ladite face inférieure 23g.

Le profilé femelle 25 comporte un deuxième bord 29 s'étendant depuis le premier bord 27 sensiblement parallèlement à la face inférieure 23g du sous-ensemble gauche 7g.

L'ensemble formé par le premier bord 27 et le deuxième bord 29 définit le profilé femelle 25 en forme de L.

Le profilé femelle 25 peut s'étendre sur toute la longueur du sous-ensemble gauche 7g, en particulier sur toute la longueur de la face inférieure 23g lorsque le profilé femelle 25 est pratiqué sous la face inférieure 23g du sous-ensemble gauche 7g.

En variante, le profilé femelle 25 peut s'étendre sur une partie seulement de la longueur du sous-ensemble gauche 7g.

Le profilé femelle 25 est par exemple pratiqué à proximité d'un bord latéral droit 31 du sous-ensemble gauche 7g.

Le sous-ensemble 7d droit comporte quant à lui un profilé mâle 33 coopérant avec le profilé femelle 25.

Dans l'exemple de réalisation illustré, le profilé mâle 33 est pratiqué sous la face inférieure 23d du sous-ensemble droit 7d.

Selon une variante de réalisation non illustrée, le profilé mâle 33 peut être pratiqué sur une autre face du sous-ensemble droit 7d, notamment la face supérieure 21d.

Dans un exemple de réalisation, le profilé mâle 33 présente également une forme de L.

Le profilé mâle 33 comporte un premier bord 35, s'étendant depuis la face inférieure 23d du sous-ensemble droit 7d, sensiblement perpendiculairement à ladite face inférieure 23d.

Le profilé mâle 33 comporte un deuxième bord 37 s'étendant depuis le premier bord 35 sensiblement parallèlement à la face inférieure 23d du sous-ensemble droit 7d.

L'ensemble formé par le premier bord 35 et le deuxième bord 37 définit le profilé mâle 33 en forme de L.

Le profilé mâle 33 peut s'étendre sur toute la longueur du sous-ensemble droit 7d, en particulier sur toute la longueur de la face inférieure 23d lorsque le profilé mâle 33 est pratiqué sous la face inférieure 23d du sous-ensemble droit 7d.

En variante, le profilé mâle 33 peut s'étendre sur une partie seulement de la longueur du sous-ensemble droit 7d.

Le profilé mâle 33 du sous-ensemble droit 7d est agencé de façon à déboucher dans le profilé femelle 25 du sous-ensemble gauche 7g. A cet effet, le profilé mâle 33 s'étend par exemple depuis un bord latéral gauche 39 du sous-ensemble droit 7d.

L'ensemble 3 comporte en outre un joint d'étanchéité 41, ou mousse d'étanchéité, monté entre les profilés mâle 33 et femelle 25.

Dans la réalisation de l'ensemble 3 illustrée aux figures, le joint d'étanchéité 41 présente une section transversale en forme de U.

Le joint d'étanchéité 41 est introduit entre le profilé femelle 25 et le profilé mâle 33, de façon à former un sandwich comportant le profilé femelle 25, le joint d'étanchéité 41 et le profilé mâle 33.

Cela permet d'assurer de façon simple un bon plaquage entre le sous-ensembles gauche 7g et le sous-ensemble droit 7d et de limiter la dispersion du joint d'étanchéité 41, ce qui permet de rendre étanche l'ensemble 3 au niveau du soubassement du véhicule automobile 1 de l'invention.

L'exemple de réalisation indique que le profilé femelle 25 équipe le sous-ensemble gauche 7g et que le profilé mâle 33 équipe le sous-ensemble droit 7d. Toutefois, l'inverse est bien entendu possible.

L'emmanchement du sous-ensemble droit 7d sur le sous-ensemble gauche 7g est ainsi obtenu au niveau de la zone de jonction 9 par l'introduction du profilé mâle 33 dans le joint d'étanchéité 41, lui-même monté dans le profilé femelle 25.

Selon une réalisation de l'ensemble 3 non représentée aux figures, l'ensemble 3 comporte un système de clippage agencé pour opérer une fixation entre le sous-ensemble gauche 7g et le sous-ensemble droit 7d.

Par exemple, le système de clippage peut comporter un ou plusieurs clip(s) de fixation monté(s) sous la face inférieure 23d du sous-ensemble droit 7d et coopérant avec un ou plusieurs centreur(s) monté(s) sous la face inférieure 23g du sous-ensemble gauche 7g.

Grâce à la présente invention, les tabliers avant gauche 13g et arrière gauche 17g, et les pare-boues avant gauche 15g et arrière gauche 19g sont intégrés au plancher gauche 11g de façon à former le sous-ensemble gauche 7g.

De la même manière, les tabliers avant droit 13d et arrière droit 17d, et les pare-boues avant droit 15d et arrière droit 19d sont intégrés au plancher droit 11d de façon à former le sous-ensemble droit 7d.

Ainsi, chaque sous-ensemble gauche 7g et droit 7d consiste chacun en une unique pièce réalisée en matériau plastique, par exemple en polypropylène.

On réduit alors, par rapport à l'art antérieur, le nombre de pièces rapportées formant l'ensemble 3 de véhicule automobile 1 et définissant le soubassement du véhicule automobile 1.

En réduisant le nombre de pièces rapportées, on limite avantageusement le risque d'infiltration d'eau par le soubassement du véhicule automobile 1, infiltration pouvant survenir notamment lors d'un passage dudit véhicule dans un gué.

On limite également le risque de dégradation des composants électriques montés au niveau du soubassement du véhicule automobile 1 qui pourrait survenir par les projections de boue ou de gravillons lors du déplacement du véhicule automobile 1.

Grâce à la présente invention, on améliore largement la qualité du soubassement du véhicule automobile 1 selon l'invention, relativement aux véhicules automobiles de l'art antérieur.

Aussi, en réduisant le nombre de pièces à assembler, on minimise le coût de fabrication ainsi que le temps de montage de l'ensemble 3 selon l'invention. On réduit aussi les coûts de maintenance du véhicule automobile 1 équipé d'un tel ensemble, coûts engendrés dans l'art antérieur pour réparer les dégâts causés par les infiltrations d'eau et de projection de boue et de gravillons.

Par ailleurs, le fait de réaliser l'ensemble de l'invention à partir de deux sous-ensembles 7g, 7d que l'on assemble entre eux permet de limiter la complexité de réalisation de l'outillage de mise en œuvre du procédé de moulage par injection plastique et de limiter le coût de revient de cet outillage, par comparaison avec le coût de revient qui serait obtenu par un ensemble réalisé en une seule pièce.

On limite aussi le temps de refroidissement qu'il est nécessaire d'appliquer aux deux sous-ensemble 7g, 7d en sortie de moule, par comparaison avec le temps de refroidissement qu'il serait nécessaire de respecter si l'ensemble était réalisé en une seule pièce.

La présente invention est particulièrement adaptée aux véhicules automobiles électriques à deux places dits « micro-citadins », en particulier ceux dont la vitesse maximale est plafonnée à 45 km/h.

Toutefois, l'ensemble 3 de véhicule automobile 1 selon l'invention peut être adapté pour équiper d'autres types véhicules automobiles électriques, par exemple ceux à quatre ou cinq places.

Aussi, l'ensemble 3 de véhicule automobile 1 selon l'invention peut être adapté pour équiper des véhicules automobiles électriques dont la vitesse maximale n'est pas nécessairement plafonnée à 45 km/h.

Comme il va de soi, la présente invention ne se limite pas aux seules formes de réalisation de cet ensemble de véhicule automobile et de ce véhicule automobile comportant un tel ensemble, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention telle que représentée par les revendications.

## Revendications

1. Ensemble (3) de véhicule automobile (1) formant le soubassement dudit véhicule automobile (1), comportant un sous-ensemble gauche (7g) et un sous-ensemble droit (7d), lesdits sous-ensembles gauche (7g) et droit (7d) consistant chacun en une unique pièce réalisée en matériau plastique et en ce que lesdits sous-ensembles gauche (7g) et droit (7d) sont assemblés entre eux au niveau d'une zone de jonction (9), lesdits sous-ensembles gauche (7g) et droit (7d) étant emmanchés l'un relativement à l'autre, ledit sous-ensemble gauche (7g) comportant un profilé femelle (25) et ledit sous-ensemble droit (7d) comporte un profilé mâle (33) coopérant avec ledit profilé femelle (25), **caractérisé en ce que** ledit profilé femelle (25) est pratiqué sous une face inférieure (23g) dudit sous-ensemble gauche (7g) et **en ce que** ledit profilé mâle (33) est pratiqué sous une face inférieure (23d) dudit sous-ensemble droit (7d).

2. Ensemble (3) de véhicule automobile (1) selon la revendication 1, **caractérisé en ce que** ledit sous-ensemble gauche (7g) comporte au moins :
- un plancher gauche (11g),
- un tablier avant gauche (13g) et un tablier arrière gauche (17g),
- un pare-boue avant gauche (15g) et un pare-boue arrière gauche (19g),
et **en ce que** ledit sous-ensemble droit (7d) comporte au moins :
- un plancher droit (11d),
- un tablier avant droit (13d) et un tablier arrière droit (17d),
- un pare-boue avant droit (15d) et un pare-boue arrière droit (19d).

3. Ensemble (3) de véhicule automobile (1) selon l'une des revendications 1 ou 2, **caractérisé en ce que** ladite zone de jonction (9) s'étend longitudinalement relativement audit ensemble (3).

4. Ensemble (3) de véhicule automobile (1) selon l'une des revendications précédentes, **caractérisé en ce que** ledit profilé femelle (25) s'étend sur toute la longueur dudit sous-ensemble gauche (7g) et **en ce que** et ledit profilé mâle (33) s'étend sur toute la longueur dudit sous-ensemble droit (7d).

5. Ensemble (3) de véhicule automobile (1) selon l'une quelconque des revendications précédentes, **caractérisé en ce qu'**il comporte un joint d'étanchéité (41) monté entre lesdits profilés mâle (33) et femelle (25).

6. Ensemble (3) de véhicule automobile (1) selon l'une quelconque des revendications précédentes, **caractérisé en ce qu'**il comporte un système de clippage agencé pour opérer une fixation entre ledit sous-ensemble gauche (7g) et ledit sous-ensemble droit (7d).

7. Véhicule automobile (1), **caractérisé en ce qu'**il comporte un ensemble (3) obtenu selon l'une quelconque des revendications précédentes.

## Patentansprüche

1. Baugruppe (3) eines Kraftfahrzeugs (1), die den Unterbau des Kraftfahrzeugs (1) bildet, mit einer linken Baugruppe (7g) und einer rechten Baugruppe (7d), wobei die linken (7g) und rechten (7d) Baugruppen jeweils aus einem einzigen Stück bestehen, das aus Kunststoff hergestellt ist, und wobei die linken (7g) und rechten (7d) Baugruppen an einem Verbindungsbereich (9) miteinander verbunden sind, wobei die linken (7g) und rechten (7d) Baugruppen relativ zueinander in Eingriff gebracht sind, wobei die linke (7g) Baugruppe eine umfasst Ein weibliches Profil (25) und die gerade Unterbaugruppe (7d) umfassen ein männliches Profil (33), das mit dem weiblichen Profil (25) zusammenwirkt, **dadurch gekennzeichnet, dass** das weibliche Profil (25) unter einer Unterseite (23g) der linken Unterbaugruppe (7g) ausgebildet ist und dass das männliche Profil (33) unter einer Unterseite (23d) der rechten Unterbaugruppe (7d) ausgebildet ist.

2. Anordnung (3) eines Kraftfahrzeugs (1) nach Anspruch 1, **dadurch gekennzeichnet, dass** die linke Unteranordnung (7g) mindestens Folgendes umfasst:
- eine linke Bodenfläche (11g),
- eine linke Vorderschürze (13g) und eine linke Rückschürze (17g),
- eine vordere linke (15g) und eine hintere linke (19g) Kotflügel,
und dass die gerade Teilbaugruppe (7d) mindestens umfasst:
- eine rechte Bodenfläche (11d),
- eine rechte Vorderschürze (13d) und eine rechte Rückschürze (17d),
- eine rechte vordere Radabdeckung (15d) und eine rechte hintere Radabdeckung (19d).

3. Anordnung (3) eines Kraftfahrzeugs (1) nach einem der Ansprüche 1 oder 2, **dadurch gekennzeichnet, dass** sich der Verbindungsbereich (9) in Längsrichtung relativ zu der Anordnung (3) erstreckt.

4. Anordnung (3) eines Kraftfahrzeugs (1) nach einem der vorhergehenden Ansprüche, **dadurch gekennzeichnet, dass** sich das Aufnahmeprofil (25) über die gesamte Länge der linken Unteranordnung (7g) erstreckt und dass sich das Einsteckprofil (33) über die gesamte Länge der rechten Unteranordnung (7d) erstreckt.

5. Einheit (3) eines Kraftfahrzeugs (1) nach einem der vorhergehenden Ansprüche, **dadurch gekennzeichnet, dass** sie eine Dichtung (41) aufweist, die zwischen dem männlichen (33) und dem weiblichen (25) Profil angebracht ist.

6. Anordnung (3) eines Kraftfahrzeugs (1) nach einem der vorhergehenden Ansprüche, **dadurch gekennzeichnet, dass** sie ein Klemmsystem aufweist, das so angeordnet ist, dass es eine Befestigung zwischen der linken Unteranordnung (7g) und der rechten Unteranordnung (7d) bewirkt.

7. Kraftfahrzeug (1), **dadurch gekennzeichnet, dass** es eine Einheit (3) aufweist, die nach einem der vorhergehenden Ansprüche erhalten wurde.

## Claims

1. An assembly (3) of a motor vehicle (1) forming the base of said motor vehicle (1), comprising a left subassembly (7g) and a right subassembly (7d), said left (7g) and right (7d) subassemblies each consisting of a single realised component of plastic material and in that said left (7g) and right (7d) subassemblies are assembled together on the level of a junction zone (9), said left (7g) and right (7d) subassemblies being fitted relative to each other, said left (7g) subassembly comprising a female section (25) and said right-hand subassembly (7d) comprises a male section (33) cooperating with said female section (25), **characterised in that** said female section (25) is made under a lower face (23g) of said left-hand subassembly (7g) and **in that** said male section (33) is made under a lower face (23d) of said right-hand subassembly (7d).

2. An assembly (3) of a motor vehicle (1) according to claim 1, **characterised in that** said left-hand subassembly (7g) comprises at least:
- a left floor (11g),
- a left front apron (13g) and a left rear apron (17g),
- a left front mudguard (15g) and a left rear mudguard (19g),
and **in that** said straight subassembly (7d) comprises at least:
- a straight floor (11d),
- a right front apron (13d) and a right rear apron (17d),
- a right front mudguard (15d) and a right rear mudguard (19d).

3. Motor vehicle assembly (3) according to either of Claims 1 and 2, **characterised in that** the said junction zone (9) extends longitudinally relative to the said assembly (3).

4. A motor vehicle assembly (3) according to one of the previous claims, wherein said female section (25) extends over the entire length of said left-hand subassembly (7g) and wherein said male section (33) extends over the entire length of said right-hand subassembly (7d).

5. Assembly (3) of a motor vehicle (1) according to any one of the previous claims,
**characterised in that** it comprises a sealing gasket (41) mounted between the said male (33) and female (25) profiles.

6. Assembly (3) of a motor vehicle (1) according to any one of the previous claims,
**characterised in that** it comprises a clip-fastening system arranged to effect a fastening between said left subassembly (7g) and said right subassembly (7d).

7. Motor vehicle (1), **characterised in that** it comprises an assembly (3) obtained according to any one of the previous claims.
